# EUROPÄISCHE PATENTANMELDUNG

(11) **EP 1 686 794 A1**
(43) Veröffentlichungstag der Anmeldung: **02.08.2006**
(21) Anmeldenummer: 05405046.3
(22) Anmeldetag: 31.01.2005
(51) Int. Cl.: H04N 5/32, G01T 1/20, A61B 6/00

(54) **Bilderfassungssystem zur elektronischen Erfassung eines Röntgenbildes und Verfahren zu dessen Ansteuerung und Auswertung**

(71) Anmelder: Miradis Holding AG, 6052 Hergiswil (CH)
(72) Erfinder: Zerrer, Ingo, 76332 Bad Herrenalb (DE); Schael, Rudi, 82538 Geretsried (DE); Landis, Peter, 5453 Remetschwill (CH)
(74) Vertreter: Frei Patent Attorneys

(57) **Zusammenfassung**

Ein Bilderfassungssystem zur elektronischen Erfassung eines Röntgenbildes, weist mindestens eine Kamera (33, 33') mit einem Objektiv (10) und einem optoelektronischen Bildwandler (21) auf. Das Objektiv (10) aus einem Linsensystem (11, 12, ... 20), weist eine monochromatische Bildfehlerkorrektur für eine vorgegebene Wellenlänge auf.

Vorzugsweise weist das Objektiv (10) in Lichtrichtung gesehen auf: eine erste negative Meniskuslinse (11), eine erste Bikonvexlinse (12), eine zweite negative Meniskuslinse (13), eine zweite Bikonvexlinse (14), eine Plankonkavlinse (15), eine erste Plankonvexlinse (16), eine dritte Bikonvexlinse (17), eine zweite Plankonvexlinse (18), eine positive Meniskuslinse (19), und eine Bikonkavlinse (20).

Bei der Auswertung von Bilddaten werden einander nicht überlappende Bildausschnitte von mehreren Kameras (33, 33') zu einem Gesamtbild (27) zusammengesetzt, wobei ein Grossteil der Bildinformationen in einem überlappenden Bereich (23) des Gesamtbildes (27) im wesentlichen unverändert von jeweils einer der mindestens zwei Kameras (33, 33') übernommen wird. Eine Belichtungssteuerung kann selektiv anhand von bestimmbaren Messfeldern (113) geschehen.

## Beschreibung

Die Erfindung bezieht sich auf das Gebiet der Röntgentechnik, insbesondere auf die elektronische Erfassung von Bildern, die auf einem Konverterschirm vorliegen. Sie bezieht sich auf einen Röntgenrezeptor mit einem Bilderfassungssystem zur elektronischen Erfassung eines Röntgenbildes und ein Verfahren zur Ansteuerung und Auswertung eines Bilderfassungssystems eines Röntgenrezeptors gemäss dem Oberbegriff der entsprechenden unabhängigen Patentansprüche.

### STAND DER TECHNIK

Bei einem digitalen Röntgenrezeptor zur elektronischen Erfassung eines Röntgenbildes ist ein Konverterschirm, beispielsweise eine Szintillationsfolie oder ein Phosphorschirm, im Strahlengang eines Röntgensystems angeordnet. Der Konverterschirm wandelt die auftreffenden Röntgenstrahlen in sichtbares Licht um, und erzeugt damit ein Schirmbild eines im Strahlengang vor dem Schirm liegenden Körpers.

In bekannten Geräten zur elektronischen Erfassung des Bildes des Konverterschirms wird das Bild durch ein oder mehrere Bildwandler, beispielsweise CCD-Arrays, in ein elektronisches Signal zur weiteren elektronischen Verarbeitung wie Digitalisierung, Speicherung etc. umgewandelt. Zur Erhöhung der Auflösung werden einzelne Bereiche oder Bildsegmente durch separate CCD-Wandler erfasst. Damit die Abbildung des Schirmbildes auf den Bildwandler möglichst wenig Raum einnimmt, sind verschiedene optische Anordnungen vorgeschlagen worden.

In der unveröffentlichten Patentanmeldung EP04405457.5 derselben Anmelderin wird ein Röntgenrezeptor zur elektronischen Erfassung eines Röntgenbildes beschrieben, welches mehrere optische Abbildungssysteme aufweist, wobei
- in einem ersten Abbildungssystem ein erstes der mindestens zwei Reflektionsmittel das Licht eines zugeordneten ersten Teilbereiches eines Konverterschirms in eine erste Reflektionsrichtung umlenkt, und
- in einem zweiten Abbildungssystem ein zweites der mindestens zwei Reflektionsmittel das Licht eines zugeordneten zweiten Teilbereiches des Konverterschirms in eine zweiten Reflektionsrichtung umlenkt.
Dabei verlaufen, vom Konverterschirm aus betrachtet, die erste und zweite Reflektionsrichtung im wesentlichen parallel zueinander aber in entgegengesetzter Richtung, und sind die beiden Reflektionsmittel in einer Richtung senkrecht zu den beiden Reflektionsrichtungen gegeneinander versetzt angeordnet.

### DARSTELLUNG DER ERFINDUNG

Es ist Aufgabe der Erfindung, ein Bilderfassungssystem zur elektronischen Erfassung eines Röntgenbildes und ein Verfahren zur Ansteuerung und Auswertung eines Bilderfassungssystems eines Röntgenrezeptors der eingangs genannten Art zu schaffen, welche eine besonders Raum sparende und effiziente Bilderfassung erlauben.

Eine weitere Aufgabe der Erfindung ist, ein Bilderfassungssystem zur elektronischen Erfassung eines Röntgenbildes zu schaffen, das eine kostengünstige und fertigungstechnisch vorteilhafte Kameraoptik aufweist.

Eine weitere Aufgabe der Erfindung ist, ein Bilderfassungssystem zur elektronischen Erfassung eines Röntgenbildes zu schaffen, welches einen kurzen Strahlengang bezüglich der Schirmgrösse erlaubt, und gleichzeitig möglichst empfindlich ist.

Eine weitere Aufgabe der Erfindung ist, ein Bilderfassungssystem zur elektronischen Erfassung eines Röntgenbildes und ein Verfahren zu dessen Ansteuerung und Auswertung zu schaffen, die eine einfache Korrektur von Kamerafehlern erlauben.

Eine weitere Aufgabe der Erfindung ist, ein Bilderfassungssystem zur elektronischen Erfassung eines Röntgenbildes und ein Verfahren zu dessen Ansteuerung und Auswertung zu schaffen, die eine einfache und mit wenig Rechenaufwand verbundene Kombination von Bildern mehrerer Kameras erlauben.

Eine weitere Aufgabe der Erfindung ist es, ein Bilderfassungssystem und ein Verfahren zur elektronischen Erfassung eines Röntgenbildes zu schaffen, welches eine optimierte Belichtung einzelner Teilbereiche des Röntgenbildes erlaubt.

Eine weitere Aufgabe der Erfindung ist es, ein Bilderfassungssystem und ein Verfahren zur elektronischen Erfassung eines Röntgenbildes zu schaffen, welche eine verbesserte Positionierung von zu durchleuchtenden Körpern erlauben.

Diese Aufgaben lösen ein Bilderfassungssystem zur elektronischen Erfassung eines Röntgenbildes und ein Verfahren zur Ansteuerung und Auswertung eines Bilderfassungssystems eines Röntgenrezeptors mit den Merkmalen der entsprechenden unabhängigen Patentansprüche.

Das Bilderfassungssystem zur elektronischen Erfassung eines Röntgenbildes weist mindestens ein Abbildungssystem zur optischen Abbildung eines Schirmbildes von einem Konverterschirm auf mindestens eine Kamera mit einem Objektiv und einem optoelektronischen Bildwandler auf. Dabei ist das Objektiv zur Abbildung eines Objektes, also des Konverterschirms, direkt oder über ein optisches Umlenksystem auf eine Bildebene, also auf den Bildwandler angeordnet. Das Objektiv ist aus einem mehrgliedrigen Linsensystem gebildet, und weist eine monochromatische Bildfehlerkorrektur für eine vorgegebene Wellenlänge auf.

Damit ist die Korrektur von Bildfehlern für die eine vorgegebene Wellenlänge optimiert. Diese Wellenlänge befindet sich vorzugsweise im sichtbaren Bereich. Dadurch, dass andere Wellenlängen nicht in Betracht gezogen werden müssen, wird die Freiheit bezüglich anderer Parameter bei der Gestaltung des Linsensystems erhöht. Insbesondere können deshalb die Lichtstärke erhöht und die Grösse des Objektivs verkleinert werden.

In einer bevorzugten Ausführungsform der Erfindung weist das Linsensystem in Lichtrichtung auf:
■ eine zur Objektebene durchgebogene erste negative Meniskuslinse,
■ eine erste Bikonvexlinse,
■ eine zur Objektebene durchgebogene zweite negative Meniskuslinse,
■ eine zweite Bikonvexlinse,
■ eine Plankonkavlinse,
■ eine erste Plankonvexlinse,
■ eine dritte Bikonvexlinse,
■ eine zweite Plankonvexlinse,
■ eine zur Bildebene durchgebogene positive Meniskuslinse, und
■ eine Bikonkavlinse.

Damit ist es möglich, ein lichtstarkes Linsensystem mit einem Aufnahmewinkel respektive Öffnungswinkel von über 50 Grad und einer Blendenzahl gleich oder kleiner 1 zu schaffen. Der grosse Aufnahmewinkel erlaubt eine kurze Abbildungsdistanz und einen kompakten Strahlengang.

In einer bevorzugten Ausführungsform der Erfindung sind alle Linsenflächen des gesamten Linsensatzes sphärisch. Vorzugsweise besteht zudem jede der Linsen aus jeweils einer von zwei Glassorten. Die Brechzahlen der Gläser sind vorzugsweise n₁ = 1.52 und n₂ = 1.77. Damit ist eine preisgünstige Wahl der Glassorten möglich, und durch die Vermeidung von asphärischen Flächen ist eine kostengünstige Fertigung möglich.

In einer weiteren bevorzugten Ausführungsform der Erfindung weisen die erste Bikonvexlinse und die dritte Bikonvexlinse jeweils beidseitig gleiche Radien auf. Vorzugsweise weisen auch die erste Plankonvexlinse und die zweite Plankonvexlinse identische Masse auf. Durch diese Massnahmen wird die Herstellung weiter vereinfacht und kostengünstiger.

In einer bevorzugten Ausführungsform der Erfindung sind die Plankonkavlinse und die erste Plankonvexlinse miteinander verkittet. Die Kittfläche ist ganz plan oder aber weist einen Radius auf, der mindestens dem 10-fachen der Gesamtbrennweite entspricht. Vorzugsweise sind auch die positive Meniskuslinse und die Bikonkavlinse miteinander verkittet.

Durch die beschriebene Konstruktion ist es möglich, eine kompakte Bauweise mit einem kleinem Frontlinsendurchmesser zu erzielen, ohne dass Totalreflexionen in den Randbereichen der Linsen auftreten. Auch kann durch eine weit entfernte Austrittspupille ein nahezu senkrechter Bestrahlungswinkel auf den Bildwandler erzielt werden, insbesondere auch für Randpixel des Bildwandlers. Dadurch wird die Bildauflösung - verglichen mit schräg auf den Bildwandler einfallenden Lichtstrahlen - verbessert. Vorzugsweise weicht der Einfallswinkel der Lichtstrahlen auf den Bildwandler um weniger als 10° oder sogar 7° von der Senkrechten ab.

Die Abbildung des Röntgenschirmes auf den Bildwandler geschieht im Objektiv vorzugsweise anhand eines gespiegelten Bildes des Röntgenschirmes, also über einen gefalteten Strahlengang.

In einer weiteren bevorzugten Ausführungsform der Erfindung weist ein Auswertemittel zur Verarbeitung von Bildern von mindestens zwei Kameras Kombinationsmittel auf, welche jeweils vorgegebene und einander nicht überlappende Bildausschnitte der mindestens zwei Kameras zusammensetzen. Vorzugsweise geschieht dieses Zusammensetzen ohne Modifikation eines Grossteils der Bildpunkte respektive deren Helligkeitswerte der einzelnen Bilder. Das heisst, dass ein Grossteil der Bildpunkte, beispielsweise über 90% oder über 95% der Bildpunkte im überlappenden Bereich ohne Modifikation von der einen oder der anderen Kamera übernommen werden.

Dies hat den Vorteil, dass das Zusammensetzen der Bilder zu einem Gesamtbild der gesamten Fläche des Konverterschirms mit einem geringen Rechenaufwand möglich ist. Insbesondere werden keine sogenannten "stitching"-Algorithmen zum Verschmelzen von separaten Ansichten desselben Bereichs des Konverterschirms erforderlich.

In einer bevorzugten Variante der Erfindung geschieht dieses Zusammensetzen entlang einer Trennlinie. Dabei liefern zwei oder mehr Kameras mit entsprechenden Abbildungssystemen jeweils Bilder, die sich teilweise überlappen. Die Trennlinie durch einen überlappenden Bereich wird bei einer Initialisierung oder Kalibrierung des Röntgenrezeptors bestimmt. Beispielsweise wird eine Hälfte eines überlappenden Bildausschnitts einer ersten Kamera, und die andere Hälfte einer zweiten Kamera zugeordnet. Oder es wird das ganze Bild der ersten Kamera mit dem entsprechend reduzierten Bild der zweiten Kamera kombiniert. Die Trennlinie ist vorzugsweise, aber nicht zwingend, eine gerade Linie parallel zu Pixelreihen der Bildwandler.

In einer anderen bevorzugten Variante der Erfindung werden beim Zusammensetzen im überlappenden Bereich einzelne Pixelfehler einer ersten Kamera durch Bildinformationen einer anderen Kamera ersetzt. Dies kann mit Werten von genau einem zugeordneten Ersatzpixel der anderen Kamera oder, falls keine exakte Zuordnung möglich ist, durch Interpolation von Werten mehrerer benachbarter Pixel der anderen Kamera geschehen. Umgekehrt können gleichzeitig auch Pixelfehler der anderen Kamera durch Informationen der ersten Kamera korrigiert werden. Da die Lage der Pixelfehler spätestens bei einer Initialisierung oder Konfiguration des Gerätes ein für allemal bestimmt werden kann, ist darauf gestützt vorgegeben, welche Pixel korrigiert werden müssen. Der verbleibende Grossteil der Pixelwerte respektive Bildinformationen des einen oder anderen Bildes im überlappenden Bereich kann ohne Änderung in das Gesamtbild übernommen werden.

Dadurch ist es möglich, auch Bildwandler, insbesondere CCD-Chips mit einer oder mehreren Fehlerpixeln zu verwenden. Dies wiederum ermöglicht eine kostengünstigere Fertigung des Röntgenrezeptors. Fehler lassen sich vollständig kompensieren, solange sich die Fehlerstellen durch Drehen des Bildwandlers in einen überlappenden Bildbereich bringen lassen. Falls mehrere Fehler über den gesamten Bildwandler verteilt sind, so lassen sich doch die Fehler in der Bildmitte, respektive in einem überlappenden Streifen durch die Bildmitte, kompensieren. Da diese Bildmitte in den allermeisten Fällen die interessierenden Bildbereiche enthält, ist die Wahrung der Qualität in der Bildmitte ausreichend. So kann auf kostengünstige Weise auch mit nicht perfekten Bildwandlern eine wesentliche Qualitätssteigerung erreicht werden.

In einer bevorzugten Ausführungsform der Erfindung weist das Auswertemittel einen embedded (eingebetteten) Prozessor auf, der im Röntgenrezeptor eingebaut ist.

Damit ist der Röntgenrezeptor in der Lage, ein Gesamtbild zu liefern, ohne dass Teilbilder in einem separaten Computer zusammengesetzt werden müssen. Dadurch wird die Integration des Röntgenrezeptors in ein Gesamtsystem vereinfacht, insbesondere bei einer Anwendung in Ländern oder Regionen, wo nur eine minimale Infrastruktur zur Verfügung steht. Beispielsweise weist das Auswertemittel auch Schnittstellenmittel zur Anbindung an eine serielle Verbindung wie RS232, USB (Universal Serial Bus), Firewire etc. auf, und übermittelt die Bilder in einem Standard-Bildformat über diese Schnittstelle.

Die oben erwähnten Prinzipien bezüglich das Zusammensetzen von Bildern und der Korrektur von Fehlern in überlappenden Bereichen sind für Systeme mit mehr als zwei, beispielsweise mit vier Bildwandlern, sinngemäss anwendbar.

In einer bevorzugten Ausführungsform der Erfindung weisen die Kameras des Bilderfassungssystems Ansteuerungsmittel zum dauernden Auslesen der CCD-Chips, und zum Unterbrechen des Auslesevorgangs, bevor eine Röntgenaufnahme gemacht wird, auf. Dadurch wird ein Dunkelstrom, der sich vor der Belichtung des Konverterschirms durch die Röntgenstrahlen in den Pixeln des CCD-Chips aufsummiert, eliminiert.

In einer weiteren bevorzugten Ausführungsform der Erfindung wird der Dunkelstrom während einer Zeitdauer, in welcher der Konverter nicht belichtet ist, gemessen. Bei einer Aufnahme wird ein derart erfasstes Dunkelstrom-Bild, gegebenenfalls entsprechend der Belichtungszeit der Aufnahme skaliert, pixelweise vom aufgenommenen Bild subtrahiert. Dadurch wird ein während der Aufnahme aufgetretene Dunkelstrom kompensiert.

In einer weiteren bevorzugten Ausführungsform der Erfindung weist das Bilderfassungssystem
- Mittel zum Messen einer Menge von Licht, welches vom Konverterschirm abgestrahlt wird;
- Mittel zur Ansteuerung einer Röntgenquelle nach Massgabe einer derart gemessenen Lichtmenge; und
- Mittel zur selektiven Auswahl eines Anteils des abgestrahlten Lichts von mindestens einem vorgegebenen Bereich des Konverterschirmes.für die Messung auf. Die Lichtmenge ist proportional zu einer Lichtintensität sowie zur einer Zeitdauer der Messung. Die Ansteuerung der Röntgenquelle geschieht vorzugsweise durch Steuerung ihrer Intensität, insbesondere durch Ausschalten der Röntgenquelle.

Damit ist es möglich, die Bestrahlung des Konverterschirms durch den durchleuchteten Körper entsprechend den interessierenden Bildbereichen zu optimieren. Damit wird auch eine Belichtung der Kamera optimiert. Die für die Messung verwendeten Bildbereiche werden auch Messfelder genannt. Die Röntgenquelle wird derart angesteuert, dass die Lichtmenge aus den Messfeldern ausreicht, um in der Kamera eine ausreichende Belichtung der Bildbereiche entsprechend den Messfeldern zu erzielen. Diese Ausführungsform ist auch unabhängig von der eingangs beschriebenen Ausgestaltung der Optik und der Bildwandler realisierbar.

In einer bevorzugten Ausführungsform der Erfindung ist das Mittel zum Messen von Licht auf die Messung von in wesentlichen einwelligem Licht ausgelegt. Es sind also keine breitbandig empfindlichen Sensoren notwendig. Die Wellenlänge ist vorzugsweise mindestens annähernd diejenige des vom Konverterschirm abgestrahlten Lichtes. Vorzugsweise sind die Mittel zum Messen einer Menge von Licht, oder nur deren lichterfassender Teil, in einem Spalt zwischen Primärspiegeln der Abbildungssysteme im Sinne der erwähnten Anmeldung EP04405457.5 angeordnet.

In einer weiteren bevorzugten Ausführungsform der Erfindung ist das Mittel zur selektiven Auswahl eine Blende, welche in einem Strahlengang zwischen dem Konverterschirm und dem Mittel zum Messen der Menge von Licht angeordnet ist und dadurch einen Anteil des Lichts, der von einem vorgegeben Bereich des Konverterschirms stammt, vom Mittel zum Messen fernhält. Diese Blende ist vorzugsweise klappbar, drehbar oder linear bezüglich eines Strahlengangs zwischen dem Konverterschirm und dem Messmittel verschiebbar. Dazu weist das Bilderfassungssystem Mittel zur Verschiebung der Blende auf, die motorisch oder manuell angetrieben sein können.

In der weiteren Verarbeitung zur Ansteuerung der Röntgenquelle wird vorzugsweise die gemessene Lichtmenge derart verwendet, dass beim Einschalten der Röntgenquelle zu Beginn einer Röntgenaufnahme die Mittel zum Messen der Lichtmenge aktiviert werden. Eine gemessene momentane Lichtintensität wird integriert und bildet dadurch die gemessene Lichtmenge. Sobald die gemessene Lichtmenge eine vorgegebene Schwelle übersteigt, wird die Röntgenquelle ausgeschaltet.

Bei der Auswahl eines Anteils des abgestrahlten Lichts wird die vom Messmittel erfasste Lichtmenge im Vergleich zur Lichtmenge, die vom gesamten Konverterschirm abgestrahlt wird, reduziert. Deshalb wird die Lichtmenge vorzugsweise nach Massgabe dieser Reduktion skaliert. Wird beispielsweise nur ein Zehntel der Fläche des Konverterschirms erfasst, so ist die erfasste Lichtmenge mit zehn zu multiplizieren, um mit der Lichtmenge des gesamten Konverterschirms vergleichbar zu sein.

Für dieses illustrative Beispiel wurde angenommen, dass das Messmittel keine ausgeprägte Richtcharakteristik aufweist, das heisst, dass es in alle Richtungen seines Erfassungsbereiches oder Sehfeldes die gleiche Empfindlichkeit aufweist. In der Realität ist dies selten der Fall, so dass vorzugsweise auch die Position der Messfelder nebst ihrer Fläche bei der Skalierung berücksichtigt wird. In einer bevorzugten Ausführungsform der Erfindung wird die Skalierung für eine vorgegebene Anzahl von Auswahlvarianten experimentell bestimmt. Jede Auswahlvariante entspricht einer üblichen Anordnung von einem oder mehreren Messfeldern.

In einer anderen bevorzugten Ausführungsform der Erfindung weist das Mittel zum Messen einer Menge von Licht eine Mehrzahl von lichtempfindlichen Sensoren auf, die jeweils Licht von unterschiedlichen Bereichen des Konverterschirms erfassen. Dabei bewirken die Mittel zu selektiven Auswahl eine Auswertung der Messwerte von einer vorgegebenen Untermenge der Sensoren. In einer alternativen Ausführungsform werden die Messwerte verschiedener Sensoren unterschiedlich gewichtet und wird die Summe der gewichteten Werte als gemessene Lichtmenge betrachtet und weiter verarbeitet.

In einer weiteren bevorzugten Ausführungsform der Erfindung weist das Mittel zum Messen einer Menge von Licht mindestens einen lichtempfindlichen Sensor auf, welcher Licht eines ausgewählten Bereiches des Konverterschirms erfasst. Dabei weisen die Mittel zu selektiven Auswahl Stellglieder respektive motorische Antriebe auf, welche den ausgewählten Bereich variieren. Vorzugsweise verändern die Stellglieder die Orientierung respektive Ausrichtung des mindestens einen Sensor selbst, oder aber die Orientierung eines Umlenkmittels, beispielsweise eines Spiegels, welcher Licht aus einem Bereich des Konverterschirms auf den mindestens einen Sensor lenkt. In beiden Fällen ändert der Messbereich auf dem Konverterschirm je nach der gewählten Blickrichtung seine Grösse, weshalb die oben erwähnte experimentelle Bestimmung von Skalierungsfaktoren je nach Blickrichtung respektive Messbereich zu bevorzugen ist.

Anstelle von, oder in Kombination mit den oben erwähnten unterschiedlich ausgerichteten oder verstellbaren Sensoren oder Spiegeln können als Umlenkmittel auch Lichtleiter verwendet werden. Die Lichtleiter sind beispielsweise Glasfasern oder Kunststoffasern, durch welche Licht aus einer oder mehreren unterschiedlichen Erfassungsrichtungen auf einen oder mehrere Sensoren gelenkt wird. Die Lichtleiter können an ihrem Lichteintrittsende unterschiedlich orientiert sein, und können starr oder mittels Stellglieder verstellbar sein. Dadurch wird im Bereich des Spaltes zwischen Primärspiegeln der Abbildungssysteme nur wenig Platz für die Lichteintrittsenden benötigt und können die Sensoren vor Strahlung geschützt angeordnet werden.

In noch einer weiteren bevorzugten Ausführungsform der Erfindung weisen die Mittel zu selektiven Auswahl ein flächiges, elektrisch ansteuerbares Filter auf, welches in einem Strahlengang zwischen dem Konverterschirm und dem Mittel zum Messen der Menge von Licht angeordnet ist und derart ansteuerbar ist, dass vorgegebene Teilflächen des Filters einen Anteil des Lichts, der von einem entsprechenden Bereich des Konverterschirms stammt, vom Mittel zum Messen fernhalten. Das Filter hat im wesentlichen dieselbe Funktion wie die oben beschriebene Blende. An Stelle der Verschiebung der Blende tritt eine entsprechende Ansteuerung des Filters. Mit dem Filter ist natürlich eine grössere und flexibel anpassbare Auswahl von Messfeldern realisierbar.

In einer weiteren bevorzugten Ausführungsform der Erfindung weisen die Mittel zur selektiven Auswahl eine Messfläche auf, und ein Abbildungssystem, welches zumindest einen Teil des Konverterschirms, vorzugsweise mindestens annähernd den ganzen Konverterschirm auf die Messfläche abbildet. Die Messfläche ist beispielsweise eine zweidimensionales Raster mit einer Mehrzahl von fotoelektrischen Messelementen wie Photodioden. Das Abbildungssystem ist beispielsweise eine Optik mit oder ohne Umlenkmittel, linsenbasiert oder nur eine Lochblende. Durch elektronische oder durch computerbasierte Auswahlmittel ist ein Ausschnitt oder Teil der Messfläche entsprechend einem abgebildeten Messfeld auswählbar, und es wird nur dieser ausgewählte Teil zur Belichtungssteuerung verwendet. Dadurch kann eine flexible Auswahl von Messfeldern realisiert werden. Es ist also anhand von Signalen einer wählbaren Untermenge der Sensoren entsprechend einem Mess-Ausschnitt ein Mass für eine Belichtung des Mess-Ausschnittes bildbar.

Ein Verfahren entsprechend der beschriebenen Ausführungsform der Erfindung zur selektiven Belichtungssteuerung in einem Röntgenrezeptor weist die folgenden Schritte auf:
- Auswählen eines Anteils von Licht, welches durch einen Konverterschirm abgestrahlt wird, aus mindestens einem vorgegebenen Bereich des Konverterschirmes;
- Messen dieses Anteils von Licht; und
- Ansteuern einer Röntgenquelle nach Massgabe des gemessenen Anteils von Licht.

In einer anderen bevorzugten Ausführungsform der Erfindung weist das Bilderfassungssystem eine vorzugsweise elektronische Kamera auf, die einen vor dem Röntgenschirm angeordneten Körper erfasst, sowie Mittel zum Speichern von computerlesbaren Referenzbildern, und Mittel zum gleichzeitigen Anzeigen eines ausgewählten Referenzbildes und eines von der Kamera erfassten Bildes auf einem Anzeigegerät.

Damit ist es möglich, die Lage eines Körpers mit einer Referenzlage zu vergleichen und darauf gestützt die Lage des Körpers zu korrigieren. Dies ist in medizinischen Anwendungen zweckmässig, wo Bilder für bestimmte diagnostische Zwecke immer wieder in denselben Standard-Körperpositionen aufgenommen werden müssen. Vorzugsweise sind die beiden Bilder gleich skaliert und geben denselben Bildausschnitt bezüglich des gewünschten Röntgenbildes wieder. Diese Ausführungsform der Erfindung ist auch unabhängig von der eingangs beschriebenen Ausgestaltung der Optik, der Bildwandler oder der Belichtungssteuerung realisierbar. Sie ist auch für Röntgenschirme in nicht-digitalen Röntgensystemen anwendbar.

In einer bevorzugten Ausführungsform der Erfindung weist das Bilderfassungssystem ferner Mittel zur überlagerten Anzeige des ausgewählten Referenzbildes und des von der Videokamera erfassten Bildes auf. Damit ist ein noch einfacherer Vergleich von tatsächlicher Position und Referenzposition möglich.

In einer bevorzugten Ausführungsform der Erfindung weist das Bilderfassungssystem Mittel zur überlagerten Anzeige von vorgegebenen Messfeldern auf mindestens einem von dem ausgewählten Referenzbild und dem von der Kamera erfassten Livebild auf. Bei der Überlagerung der Messfelder mit dem Livebild ist die Beziehung zwischen der diagnostisch relevanten Lage der Messfelder und dem Körper unmittelbar sichtbar.

Die angezeigte Position der Messfelder kann einer Position von röntgenstrahlempfindlichen Messfeldern, wie sie gemäss dem Stand der Technik auf einen Röntgenschirm aufgeklebt werden, entsprechen. Die Position kann aber auch einer Position von Messfeldern entsprechen, wie sie mit dem oben beschriebenen System zur selektiven Belichtung realisierbar sind. Bei den flexibel verschiebbaren Messfeldern (mittels Filter oder als Auswahl eines Teiles einer Messfläche) sind die Messfelder vorzugsweise computerunterstützt verschiebbar. Dabei wird die Lage des Messfeldes auf der Anzeige durch ein Messfeld-Positionsbild zumindest dem Livebild überlagert dargestellt, und kann das Messfeld durch ein Eingabegerät ausgewählt und verschoben werden. Dabei wird das Messfeld in der Anzeige verschoben, und bei einer Röntgenaufnahme wird die Auswahl des abgestrahlten Lichtes entsprechend der Lage des verschobenen Messfeldes vorgenommen. Die Belichtung wird also auf die durch das Messfeld angezeigte und auswählbare Stelle optimiert.

Ein Verfahren entsprechend der beschriebenen Ausführungsform der Erfindung zur Positionskontrolle in einem Röntgensystem weist die folgenden Schritte auf:
- Erfassen eines Bildes eines Körpers vor einem Röntgenschirm mittels einer elektronischen Kamera;
- Auslesen eines computerlesbaren Referenzbildes aus einem Bildspeicher; und
- gleichzeitiges Anzeigen eines ausgewählten Referenzbildes und des von der Kamera erfassten Bildes auf einem Anzeigegerät;
- sowie, optional, überlagertes Darstellen eines Messfeldes auf dem durch die elektronische Kamera erfassten Bild und/oder dem Referenzbild.
Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: ein Linsensystem gemäss der Erfindung;
- Figur 2: eine Struktur einer Bildverarbeitung gemäss der Erfindung;
- Figur 3: ein Zusammensetzen zweier Teilbilder mit Fehlerstellen;
- Figur 4: einen Röntgenrezeptor gemäss der Erfindung;
- Figur 5: eine Aufsicht auf einen Röntgenrezeptor mit einem Detektor zur selektiven Belichtungsmessung;
- Figur 6: eine weitere Ausführungsform eines Röntgenrezeptors mit mehreren Detektoren zur selektiven Belichtungsmessung;
- Figur 7: ein Sensor mit einer Blende zur selektiven Belichtungsmessung;
- Figur 8: ein Blendenstreifen zur selektiven Belichtungsmessung;
- Figur 9: ein ausrichtbarer Sensor zur selektiven Belichtungsmessung;
- Figur 10: einen Belichtungsmesser mit Lichtleitern;
- Figur 11: eine Messfläche mit auswählbarem Mess-Ausschnitt;
- Figur 12: eine Struktur eines Bilderfassungssystems mit einer überlagerten Darstellung eines Livebildes mit einem Referenzbild; und
- Figur 13 und 14: Varianten von Darstellung eines Livebildes mit einem Referenzbild.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

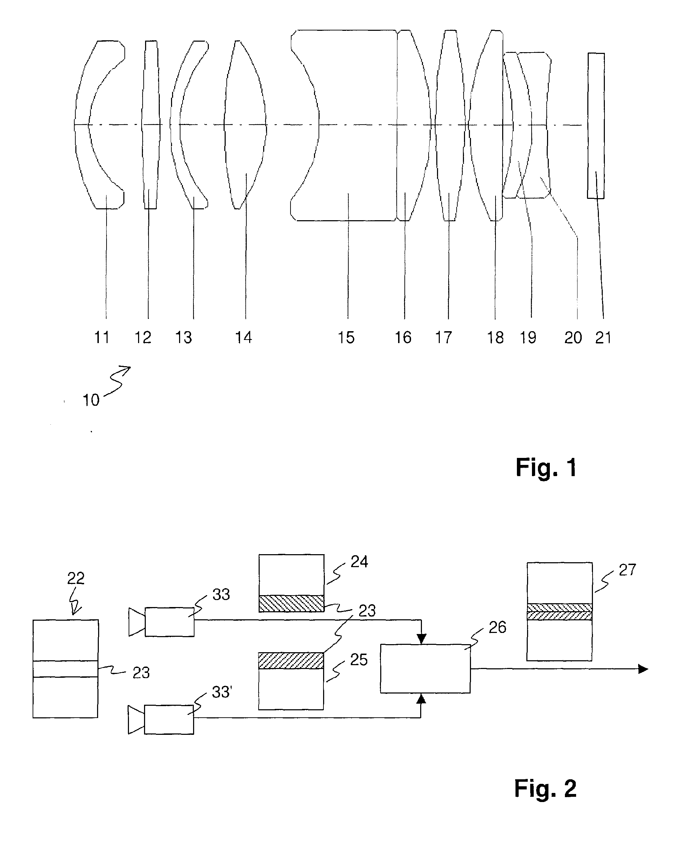

Figur 1 zeigt ein Linsensystem gemäss der Erfindung. Es weist, in Lichtrichtung gesehen, also in der Abbildung von links nach rechts, auf: eine zur Objektebene durchgebogene erste negative Meniskuslinse 11, eine erste Bikonvexlinse 12, eine zur Objektebene durchgebogene zweite negative Meniskuslinse 13, eine zweite Bikonvexlinse 14, eine Plankonkavlinse 15, eine erste Plankonvexlinse 16, eine dritte Bikonvexlinse 17, eine zweite Plankonvexlinse 18, eine zur Bildebene durchgebogene positive Meniskuslinse 19, und eine Bikonkavlinse 20.

Vorzugsweise weisen die einzelnen Linsen, reduziert auf eine Brennweite von 100 mm, innerhalb von +/-10% die folgenden Kennwerte auf

| | **Radius** | **Abstand** | **Brechzahl** |
|---|---|---|---|
| erste negative Meniskuslinse 11 | 149.6 | 16.6 | 1.77 |
| | 70.1 | 57.0 | |
| erste Bikonvexlinse 12 | 1077.9 | 14.2 | 1.77 |
| | -1077.9 | 0.6 | |
| zweite negative Meniskuslinse 13 | 143.2 | 9.4 | 1.52 |
| | 102.8 | 39.8 | |
| zweite Bikonvexlinse 14 | 289.7 | 42.1 | 1.77 |
| | -132.1 | 47.1 | |
| Plankonkavlinse 15 | -102.1 | 67.9 | 1.52 |
| erste Plankonvexlinse 16 | unendlich | 27.3 | 1.77 |
| | -194.9 | 5.7 | |
| dritte Bikonvexlinse 17 | 425.6 | 31.0 | 1.77 |
| | -425.6 | 5.7 | |
| zweite Plankonvexlinse 18 | 194.9 | 27.3 | 1.77 |
| | unendlich | 9.2 | |
| positive Meniskuslinse 19 | -210.3 | 17.8 | 1.52 |
| Bikonkavlinse 20 | -147.6 | 11.3 | 1.77 |
| | 398.9 | | |

Radius und Abstand sind in mm angegeben. Die Durchmesser der Linsen liegen, bezogen auf eine Brennweite von 35 mm, zwischen ca. 45 mm und 60 mm. Die verwendeten zwei Glassorten mit den Brechzahlen n₁ = 1.52 und n₂ = 1.77 sind vorzugsweise Kronglas BK 7 und Schwertflint SF14.

Figur 2 zeigt eine Struktur einer Bildverarbeitung gemäss der Erfindung. Ein Bildbereich 22 eines Konverterschirms wird durch zwei Kameras 33, 33' aufgenommen, welche ein erstes Teilbild 24 und ein zweites Teilbild 25 mit einem überlappenden Bildbereich 23. Die beiden Teilbilder 24, 25 werden an ein Kombinationsmittel 26 übertragen. Das Kombinationsmittel 26 ist vorzugsweise durch ein Bildverarbeitungsprogramm in einem externen Rechner oder in einem eingebetteten Rechner 58 im Röntgenrezeptor 1 selber implementiert. Das Kombinationsmittel erzeugt aus den Bilddaten der Teilbilder 24, 25 ein zusammengesetztes oder kombiniertes Bild 27.

In der Figur 2 ist beispielhaft angedeutet, dass im kombinierten Bild 27 eine Hälfte des überlappender Bildbereiches 23 durch Bilddaten des ersten Teilbildes 24, und die zweite Hälfte aus Bilddaten des zweiten Teilbildes 25 gebildet wird. Die beiden Hälften sind also durch eine Linie getrennt. Vorzugsweise verläuft diese Linie auf den Bildwandlern 21 der beiden Kameras 33, 33' entlang einer Zeile von Pixeln. Dies wird erreicht, indem bei einer Kalibrierung des Röntgenrezeptors 1 die optischen Systeme respektive Bildwandler 21 entsprechend ausgerichtet werden und die Pixelzeilen für den Übergang bestimmt und im Kombinationsmittel 26 gespeichert werden. Anschliessend können die Bilder ohne weiteren Rechenaufwand kombiniert werden.

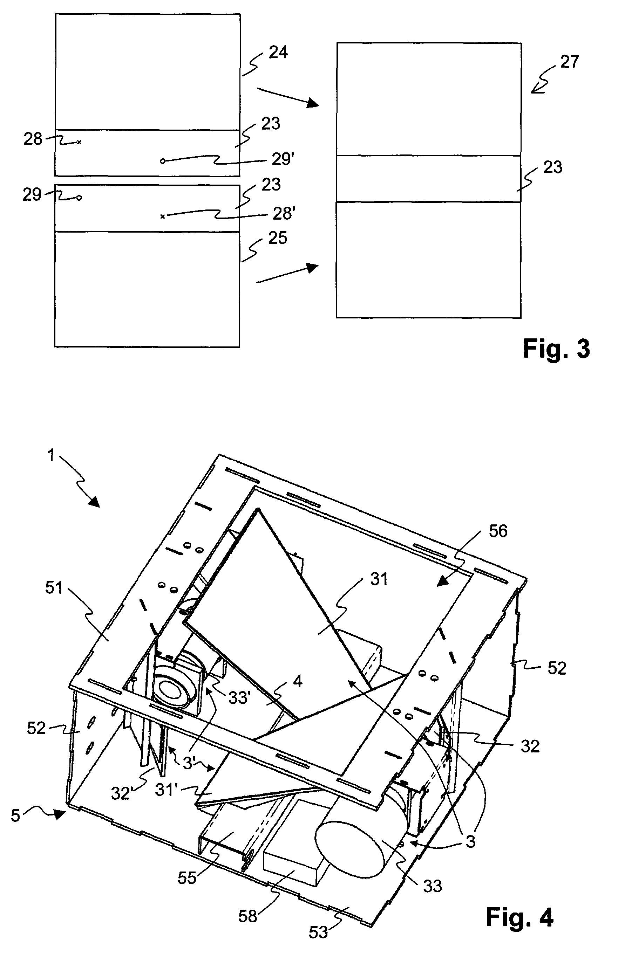

Figur 3 zeigt ein Zusammensetzen zweier Teilbilder 24, 25 mit Fehlerstellen. Auf der linken Seite sind die Teilbilder 24, 25 noch nicht zusammengesetzt. Das erste Teilbild 24 weist im überlappender Bildbereich 23 eine erste Fehlerstelle 28 auf, und das zweite Teilbild 25 eine zweite Fehlerstelle 28'. Die erste und zweite Fehlerstelle 28, 28' entstehen durch Pixelfehler, die nach der Herstellung der Bildwandler 21 ermittelt werden. Die aus einem Pixelfehler 28, 28' resultierende jeweils fehlende respektive falsche Information wird durch Informationen aus dem überlappenden Bereich des jeweils anderen Teilbildes 24, 25 ersetzt. Dieses Prinzip ist unabhängig von der sonstigen Art, in welcher die Teilbilder 24, 25 kombiniert werden, sei es durch Aneinanderfügen von Bildern, wie oben beschrieben, oder durch einen graduellen Übergang zwischen den Bildern im überlappenden Bildbereich 23 etc.

In einer bevorzugten Ausführungsform der Erfindung werden in einer Initialisierungs- oder Kalibrierungsphase des Röntgenrezeptors 1 die Pixelfehler 28, 28' in den Bildwandlern 21 bestimmt, und die Bildwandler 21 derart gedreht, dass möglichst viele der Fehlerstellen 28, 28' in den überlappenden Bildbereich 23 zu liegen kommen. Entsprechend der bekannten Lage der Fehlerpixel 28, 28' werden komplementäre Pixel 29, 29' oder gegebenenfalls Gruppen von Pixeln des jeweils anderen Bildwandlers 21 bestimmt, welche derselben Stelle des Bildbereichs 22 respektive des Konverterschirms entsprechen. Die Koordinaten der Fehlerpixel 28, 28' und dieser komplementären Stellen 29, 29' werden gespeichert, und bei der Kombination der Bilder im Betrieb des Röntgenrezeptors 1 wird jeweils die Bildinformation zu einem Fehlerpixel 28, 28' entsprechend der Information der komplementären Pixel 29, 29' korrigiert.

Figur 4 zeigt einen digitalen Röntgenrezeptor gemäss der Erfindung. Der Röntgenrezeptor 1 weist einen im wesentlichen rechteckigen Konverterschirm zur Umwandlung von Röntgenstrahlen in sichtbares Licht auf. In der Figur 4 ist der Konverterschirm der Klarheit halber nicht eingezeichnet, und sind auch einzelne Seitenwände 52 weggelassen. Der Konverterschirm ist in einer Gehäusefront mit einer Einfassung 51 angeordnet, und eine wirksame Fläche des Konverterschirms entspricht im wesentlichen einer Öffnung 56 in dieser Einfassung 51. Einander teilweise überlappende Bereiche des Konverterschirms werden durch jeweils zugeordnete Abbildungssysteme 3, 3' auf Kameras 33, 33' abgebildet, wo durch Bildwandler 21 wie beispielsweise CCD-Arrays elektronisch weiter verarbeitbare Bildsignale entsprechend Teilbildern 24, 25 zur Repräsentation einer Ansicht des jeweiligen Teilbereichs erzeugbar sind. Zur Kombination dieser Teilbilder 24, 25 zu einem kombinierten Bild 27 ist in einer bevorzugten Ausführungsform der Erfindung im Röntgenrezeptor 1 selber ein entsprechend programmierter embedded-Rechner 58 angeordnet. Der Rechner 58 ist vorzugsweise ein traditioneller Mikroprozessor oder als Signalprozessor oder ein ASIC (application specific integrated circuit) oder FPGA (field programmable gate array) oder eine verwandte Technologie.

Ein Abbildungssystem 3 weist einen Primärspiegel 31 und einen Sekundärspiegel 32 auf, welche Licht von einem Teilbereich des Konverterschirms zu einer Kamera 33 führen. Analog dazu weist ein weiteres Abbildungssystem 3' einen weiteren Primärspiegel 31', einen weiteren Sekundärspiegel 32' und eine weitere Kamera 33' auf. Die Primärspiegel 31, 31' sind jeweils in einem Winkel von vorzugsweise annähernd 45 Grad zu einer Ebene des Konverterschirms angeordnet. Ferner beträgt ein Winkel zwischen den Primärspiegeln 31, 31' annähernd 90 Grad. Der Primärspiegel 31 ist trapezförmig, wobei die längere Seite der beiden parallelen Seiten des Trapezes in der Nähe eines ersten Randes des Konverterschirms 2 und parallel zu diesem ersten Rand verläuft. Die längere Seite des weiteren Primärspiegels 31' verläuft parallel und nahe zum gegenüberliegenden Rand des Konverterschirms 2.

Die beiden Primärspiegel 31, 31' sind in der Richtung dieses Randes gegeneinander versetzt, das heisst dass die längere Seite des Primärspiegels 31 sich entlang des ersten Randes vom Bereich einer ersten Ecke bis ungefähr in einen Mittenbereich des ersten Randes erstreckt, und dass die längere Seite des weiteren Primärspiegels 31' sich entlang des gegenüberliegenden Randes vom Bereich einer zweiten Ecke bis ungefähr in einen Mittenbereich des gegenüberliegenden Randes erstreckt. Dabei liegen sich die erste und zweite Ecke bezüglich des Konverterschirms 2 diagonal gegenüber.

Die Primärspiegel 31, 31' lenken senkrecht vom Konverterschirm abgestrahlte Lichtstrahlen in eine im wesentlichen parallel zum Konverterschirm verlaufende Richtung um. Die derart abgelenkten Strahlen werden durch die entsprechenden Sekundärspiegel 32, 32' zur entsprechenden Kamera 33, 33' umgelenkt. Die von jeweils einem Teilbereich des Konverterschirms ausgehenden und in die entsprechende Kamera 33, 33' geführten Strahlen bilden jeweils einen gefalteten Strahlengang.

Der Konverterschirm 2 ist beispielsweise ein Phosphorschirm oder eine Szintillationsfolie, mit einem Fluoreszenzleuchtstoff wie z.B. ZnS, CsI, CsI:Na oder CsI:Tl, sowie CaWO4 (Scheelit), LaOBr:Tb oder Gd2O2S:Tb. Die Wahl des Leuchtstoffes richtet sich nach einer spektralen Empfindlichkeit des verwendeten CCD-Arrays. Da CCD-Sensoren in der Regel die grösste Empfindlichkeit im Bereich grüb/gelb bis rot aufweisen, sind CsL:TL und Gd2O2S:Tb bevorzugt.

In einem beispielhaften System weist der Konverterschirm einen Bildbereich 22 mit einer wirksamen Grösse von ca. 360 mal 440 mm auf, und überlappen sich die beiden Teilbereiche um ca. 41 mm. Eine Kameralinse ist entlang einer optischen Achse des entsprechenden Abbildungssystems 3 um 400 mm vom Mittelpunkt des Teilbereichs entfernt. Der Blickwinkel der Kamera 33 beträgt somit ca. zwei mal 28.5 Grad. Die CCD Kamera 33 hat beispielsweise eine Auflösung von 2048 mal 3072 Pixeln.

Dasselbe Prinzip der Erfindung ist auch mit vier Abbildungssystemen 3 realisierbar, wobei der Strahlengang vorzugsweise ohne einen Sekundärspiegel nur durch einen Primärspiegel von einem Teilbereich des Konverterschirms 2 zu einer Kamera gelenkt wird. Dabei liegt jede der Kameras jeweils hinter dem Primärspiegel eines nachfolgenden Abbildungssystems.

Durch die versetzte Anordnung der Primärspiegel 31, 31' und die Trapezform der Primärspiegel 31, 31' kann ohne Beeinflussung der Abbildungssysteme 3, 3' - in Richtung senkrecht zum Konverterschirm 2 betrachtet - ein Spalt 4 zwischen den Primärspiegeln 31, 31' angeordnet werden. Dieser Spalt 4 erlaubt eine Anordnung eines Detektors 9 zur Messung einer Bildintensität.

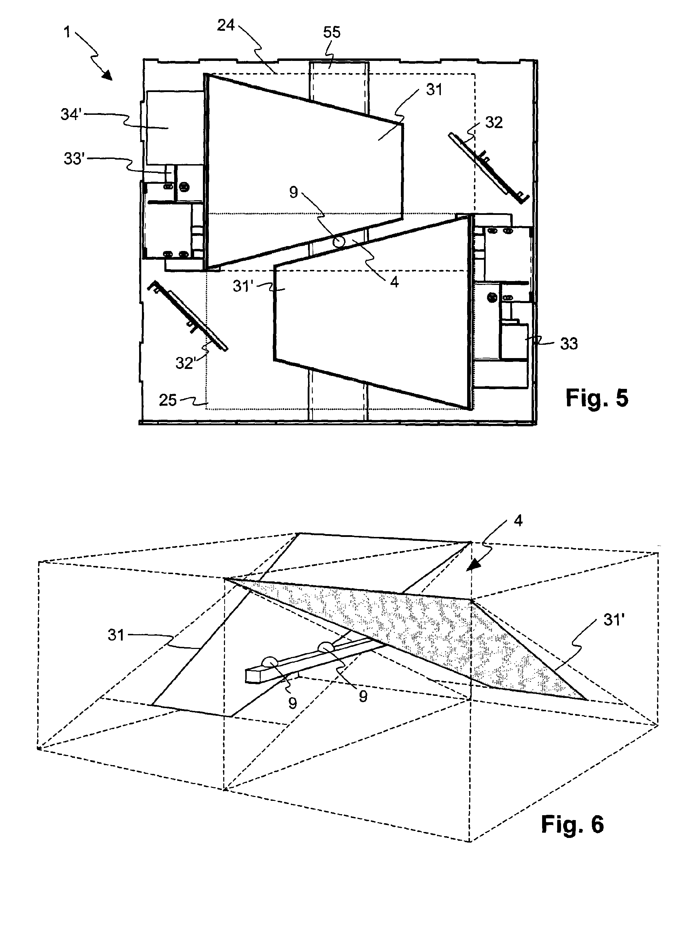

Figur 5 zeigt einen Röntgenrezeptor 1 mit einem Detektor 9 zur selektiven Belichtungsmessung in einer Aufsicht. Der Detektor 9 ist in dem Spalt 4 zwischen den beiden Primärspiegeln 31, 31' angeordnet. Ein Sichtbereich des Detektors 9 umfasst im wesentlichen den ganzen Konverterschirm mit den einander überlappenden Bereichen entsprechend dem ersten Teilbild 24 und dem zweiten Teilbild 25. Vor dem Detektor kann, wie weiter unten gezeigt, eine Blende 92 oder ein Filter angeordnet sein, diese sind der Klarheit halber in der Figur 5 nicht eingezeichnet.

Figur 6 zeigt eine weitere bevorzugte Ausführungsform eines Röntgenrezeptors 1 mit mehreren Detektoren 9 zur selektiven Belichtungsmessung. Die Detektoren 9 sind entlang einer linearen Anordnung im Spalt 4 entweder parallel zu den Gehäusewänden 52 oder parallel zu einer Projektion der inneren Kanten der Primärspiegel 31, 31' auf den Gehäuseboden 53 angeordnet. Ein Teil der Detektoren 9 ist auf Bereiche des Konverterschirms entsprechend dem ersten Teilbild 24 ausgerichtet, ein anderer Teil der Detektoren 9 auf Bereiche entsprechend dem zweiten Teilbild 25. In einer alternativen Ausführungsform der Erfindung sind die Detektoren 9 auf Teilbereiche des Konverterschirms ausrichtbar, und/oder können Messwerte der Detektor 9 einzeln ausgewählt oder gewichtet summiert werden. Im Wesentlichen wird dabei ähnlich wie mit einer Blende erreicht, dass selektiv nur Licht aus bestimmten Bereichen des Konverterschirms für die Belichtungsmessung erfasst wird.

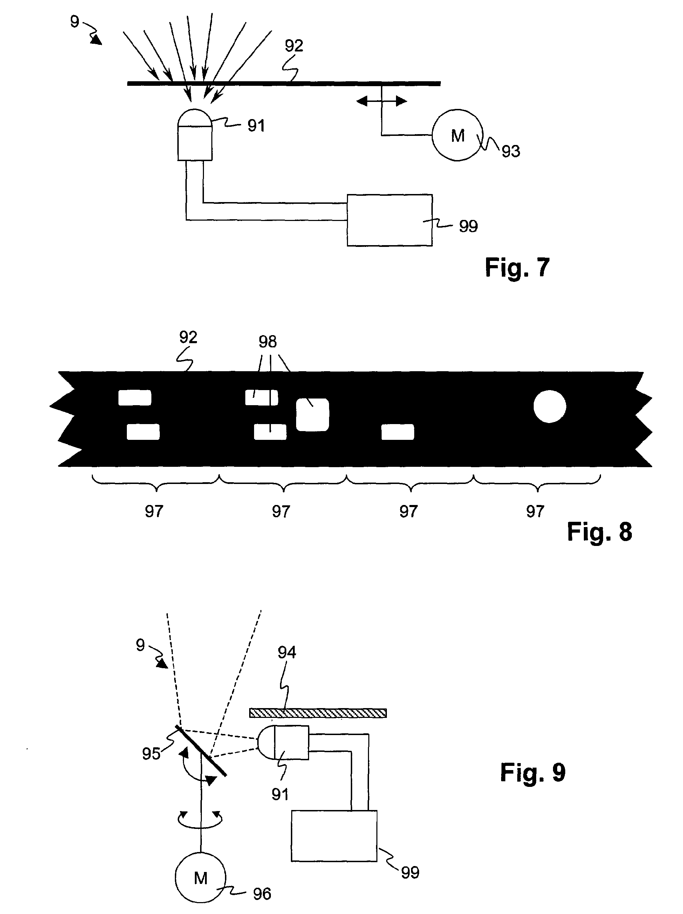

Figur 7 zeigt einen Detektor 9 mit einem Sensor 91, einer Detektor-Auswerteeinheit 99 und einer Blende 92 zur selektiven Belichtungsmessung. Die Blende 92 ist mittels einer Blendenverstellung 93 verschiebbar oder drehbar, so dass verschiedene Anordnungen von Durchlassbereichen oder Blendenausschnitten 98 in einen Strahlengang vor den Sensor 91 gebracht werden können. Anstelle der verschiebbaren Blende 92 kann ein elektrisch ansteuerbares Filter, beispielsweise ein LCD-(Flüssigkristall)-Filter vorliegen. Das LCD-Filter weist vorzugsweise eine Vielzahl von einzelnen Pixeln auf, die flexibel je nach der gewünschten Anordnung von Durchlassbereichen analog zu den Blendenausschnitten 98 angesteuert werden. Alternativ dazu weist das LCD-Filter eine begrenzte Anzahl grösserer Bereiche auf, wobei jeder der Bereiche als Ganzes ansteuerbar und abdunkelbar ist. Damit können vorgegebene Kombinationen der Bereiche durchlässig gemacht respektive verdunkelt werden, und die Ansteuerung ist, verglichen mit einer Vielzahl von Pixeln, einfacher ausführbar.

Der Sensor 91 ist beispielsweise eine hochempfindliche Photodiode. Dies bedingt, dass das Gehäuse des Röntgenrezeptors 1 völlig lichtdicht konstruiert ist. Die Photodiode 91 weist typischerweise eine integrierte Optik auf, welche vor allem Licht aus einer Hauptrichtung auf die Diode leitet, aber auch einen Anteil von Licht aus abweichenden Richtungen.

Die Eigenschaften der Optik sind gemäss der Einsatzart gewählt: Für eine feststehende einzelne Photodiode 91, bei welcher die Abschirmung der Messbereiche durch eine Blende oder ein Filter geschieht, wird eine Photodiode 91 mit einen breiten Öffnungswinkel und einer über diesen Sichtbereich möglichst homogenen Empfindlichkeit gewählt. Für einen ausrichtbaren Sensor 91 oder für Sensoren 91, zwischen denen umgeschaltet wird, wird hingegen ein kleiner Öffnungswinkel gewählt, so dass ein einzelner Sensor 91 Licht nur aus einem begrenztem Bereich des Konverterschirms erfasst. Ein solcher Bereich hat beispielsweise einen Durchmesser von 5 bis 10 Zentimetern.

Figur 8 zeigt einen Blendenstreifen 92 zur selektiven Belichtungsmessung, der gemäss Figur 7 vor dem Sensor 91 verschiebbar ist. Der Blendenstreifen 92 weist mehrere linear aneinandergereihte Blendenbereiche 97 auf. Jeder Blendenbereich 97 weist einen oder mehrerere durchsichtige Blendenausschnitte 98 oder Öffnungen auf und entspricht einer Standard-Röntgenaufnahme für einen bestimmten Zweck. Beispielsweise sind die Blendenausschnitte 98 für Lungenaufnahmen anders angeordnet als für Aufnahmen der Wirbelsäule, und lassen nur Licht aus dem interessierenden Bildbereich durch, so dass die Belichtung auf diesen Bereich abgestimmt werden kann. In der Figur 8 sind der Erklärung halber Trennlinien zwischen den Blendenbereichen 97 eingezeichnet, die in der Realität aber nicht lichtdurchlässig sind.

Bei der Belichtungserfassung respektive zur Ansteuerung der Röntgenquelle 102 wird auch die Grösse der Blendenausschnitte 98 berücksichtigt: wenn die Gesamtfläche der Blendenausschnitt 98 vergrössert wird, so muss ein Grenzwert für die Lichtmenge, bei welcher die Strahlenquelle 102 ausgeschaltet wird, in etwa proportional vergrössert werden, um dieselbe Belichtung zu erreichen. Falls ein Blendenausschnitt 98 in einen Bereich verschoben wird, bezüglich welchem ein Sensor 91 weniger empfindlich ist, so muss der Grenzwert entsprechend reduziert werden.

Praktischerweise wird der Grenzwert experimentell bestimmt, indem für jede bestimmte feste Konfiguration von Blendenausschnitten 98 oder für jede bestimmte Orientierung von einem oder mehreren ausrichtbaren Sensoren (siehe unten) und/oder für jede vorgegebene Kombination von Sensorwerten die erfasste Lichtintensität Lₖ bei einer gleichmässigen Belichtung des Konverterschirms gemessen wird. Der Index k steht für die entsprechende Konfiguration. Als Referenz wird eine Lichtintensität L_{ref} ohne Blende respektive Filter und gegebenenfalls in einer Normalposition der Detektoren 9 gemessen. Bei einer späteren Messung mit einer bestimmten Konfiguration k wird der gemessene Wert der Lichtintensität oder der Lichtmenge mit L_{ref}/Lₖ normiert, das heisst multipliziert. Der normierte Wert wird mit dem Grenzwert zum Ausschalten der Strahlenquelle 102 verglichen.

Figur 9 zeigt einen ausrichtbaren Sensor 9 zur selektiven Belichtungsmessung, wie er in den Anordnungen gemäss Figur 5 oder 6 einsetzbar ist. Der Sichtbereich des Sensors 91 wird durch einen um zwei Achsen drehbaren und schwenkbaren Detektorspiegel 95 auf einen gewünschten vorgegebenen Bereich des Konverterschirms umgelenkt. Der Detektorspiegel 95 wird durch eine Spiegelverstellung 96 bewegt. Die Spiegelverstellung 96 wie auch die Blendenverstellung 93 sind vorzugsweise durch einen Bedienungsrechner respektive eine Datenverarbeitungseinheit 106 gemäss der Art der gewünschten Aufnahme ferngesteuert. Eine Detektor-Abschirmung 94 schützt den Sensor 91 und die Detektor-Auswerteeinheit 99 vor einem Restanteil von Röntgenstrahlen, welcher den Konverterschirm durchdringt. Die Detektor-Auswerteeinheit 99 erzeugt ein digitales oder analoges Signal, welches die vom Sensor 91 empfangene Lichtintensität oder aber - je nachdem wie die Bearbeitung zwischen der Detektor-Auswerteeinheit 99 und der Datenverarbeitungseinheit 106 aufgeteilt ist - die empfangene Lichtmenge repräsentiert.

In einer nicht gezeichneten Ausführungsform der Erfindung ist der Sensor 91 selber dreh- und schwenkbar angeordnet, und wird kein Detektorspiegel 95 verwendet.

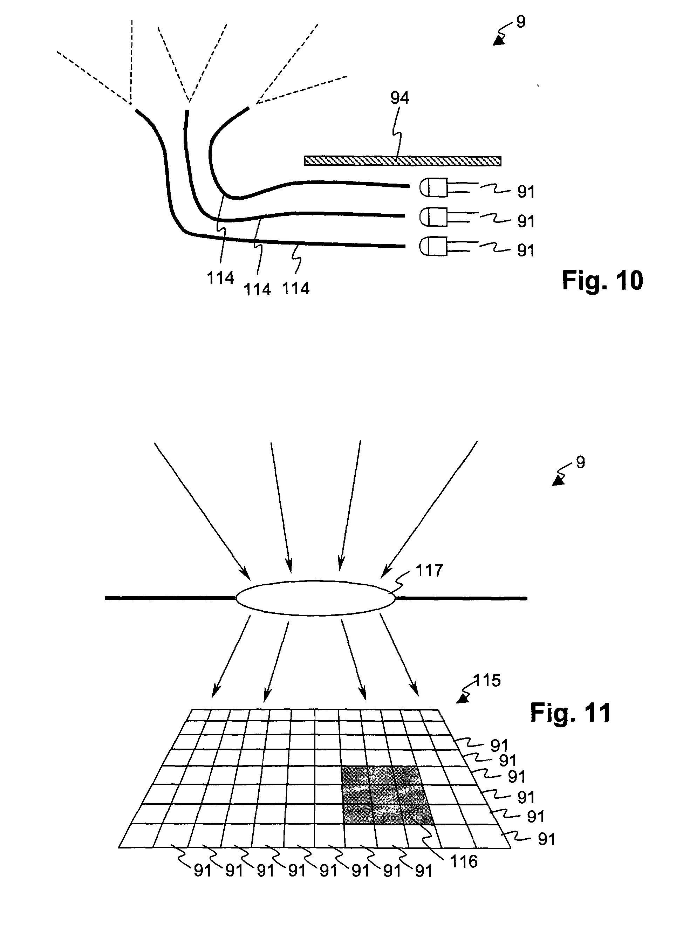

Figur 10 zeigt schematisch einen Belichtungsmesser mit Lichtleitern 114, welche jeweils Licht aus einem strichliert gezeichneten Empfangsbereich auf einen zugeordneten Sensor 91 leiten. Befestigungen der Lichtleiter 114 und allfällige Bewegungsmittel zur aktiven Ausrichtung der Lichteintrittsenden sind der Einfachheit nicht eingezeichnet.

Figur 11 zeigt schematisch ein Mittel zum Messen einer Menge von Licht, welches ein Messraster oder eine Messfläche 115 mit einer Vielzahl von einzelnen Sensoren 91 aufweist. Eine Detektor-Optik 117 ist zur Abbildung des Konverterschirmes (nicht eingezeichnet) auf die Messfläche 115 angeordnet. Ein frei oder flexibel wählbarer Teil der Messfläche 115 kann mittels einer elektronischen oder computerbasierten Auswahl als Mess-Ausschnitt 116 definiert und ausgewertet werden. Dies geschieht beispielsweise, indem Ströme von Phododioden des Mess-Ausschnittes 116 summiert und gemeinsam integriert werden und so ein Mass für die Belichtung des auf den Mess-Ausschnitt 116 abgebildeten Messfeldes ergeben.

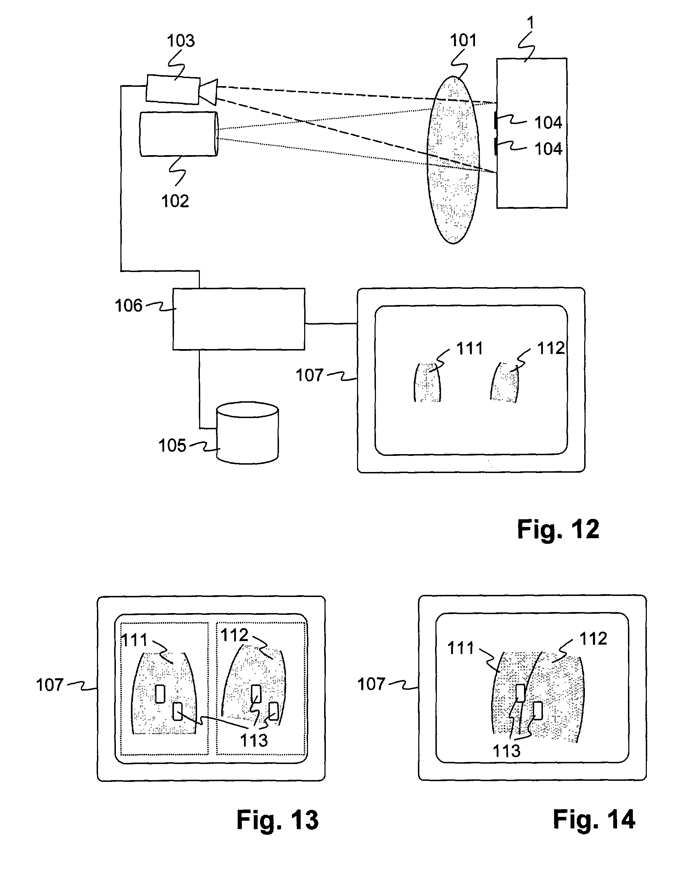

Figur 12 zeigt eine Struktur eines Bilderfassungssystems mit einer überlagerten Darstellung eines Livebildes 112 mit einem Referenzbild 111. Eine Kamera 103 ist in der Nähe einer Strahlenquelle 102 angeordnet und erfasst ein Bild des Röntgenrezeptors 1 mit einem davor angeordneten Körper 101. Im medizinischen Bereich ist der Körper 101 ein Teil eines menschlichen Körpers, in anderen Anwendungen ist er irgendein zu durchleuchtendes Objekt. Bilddaten der Kamera 103 werden über eine Datenverbindung zu einer Datenverarbeitungseinheit 106 übertragen, ebenso Referenzbilder von einem Referenzbild-Speicher 105. Die Datenverarbeitungseinheit 106 ist zur Aufbereitung der Kamerabilder 112 und der Referenzbilder 111 und zur gleichzeitigen Anzeige derselben auf einem Anzeigegerät 107 ausgebildet.

Auf der Vorderseite des Röntgenrezeptors 1 können Messfelder 104 gemäss dem Stand der Technik angeordnet sein. Ein solches Messfeld 104 misst die durch den Körper 101 abgeschwächte Röntgenstrahlung durch eine vorgegebene Fläche, so dass die Belichtung in diesem Bereich gesteuert werden kann. Alternativ dazu ist der Röntgenrezeptor 1 mit Mitteln zur selektiven Messung von Licht des Konverterschirms ausgerüstet, wie weiter oben beschrieben ist. Es sind dabei keine physischen Messfelder vorhanden, die selektive Abschirmung oder die Ausrichtung von Sensoren 91 definiert aber virtuelle Messfelder, deren Lage bezüglich des Konverterschirms kontrollierbar und bekannt ist.

Die Datenverarbeitungseinheit 106 weist vorzugsweise eine weitere (nicht eingezeichnete) Kommunikationsverbindung zum Datenaustausch mit dem Röntgenrezeptor 1 auf. Über diese Kommunikationsverbindung übermittelt der Röntgenrezeptor 1 Bilddaten und gegebenenfalls Messwerte oder Steuersignale für die Belichtungsmessung an die Datenverarbeitungseinheit 106, und übermittelt die Datenverarbeitungseinheit 106 Steuersignale für die Kameras 33, 33' und/oder die Blendenverstellung 93 und/oder Spiegelverstellung 96 an den Röntgenrezeptor 1. Der Röntgenrezeptor 1 kann auch eine eigene Kommunikationsverbindung zu einem Steuergerät der Strahlenquelle 102 aufweisen, um diesem Steuergerät ein Signal zum Ausschalten der Strahlenquelle 102 zu übermitteln.

In der Figur 12 sind ein Referenzbild 111 und ein Livebild 112 nebeneinander auf demselben Bildschirm respektive Anzeigegerät 107 dargestellt. Figuren 13 und 14 zeigen weitere Varianten von Darstellungen eines Livebildes 112 zusammen mit einem Referenzbild 111. In beiden Varianten sind diesen Bildern zudem Messfeld-Positionsbilder 113 überlagert. Diese Messfeld-Positionsbilder 113 geben die Lage von realen oder virtuellen Messfeldern im Röntgenrezeptor 1 wieder.

Figur 13 zeigt nebeneinander angeordnete Referenzbilder 111 und Livebilder 112, wobei beiden das Messfeld-Positionsbild 113 überlagert ist. Alternativ dazu können auch nur dem Livebild 112 oder nur dem Referenzbild 111 das Messfeld-Positionsbild 113 überlagert sein. Figur 14 zeigt eine überlagerte Darstellung von Referenzbild 111, Livebild 112 und dem Messfeld-Positionsbild 113. Jede der beschriebenen Darstellungsarten erlaubt es, das Livebild 112 durch Bewegung des Körpers 101 in Übereinstimmung mit dem Referenzbild 111 und/oder dem Messfeld-Positionsbild 113 zu bringen.

### BEZUGSZEICHENLISTE

- 1: Röntgenrezeptor
- 10: Objektiv, Linsensystem
- 11: erste negative Meniskuslinse
- 12: erste Bikonvexlinse
- 13: zweite negative Meniskuslinse
- 14: zweite Bikonvexlinse
- 15: Plankonkavlinse
- 16: erste Plankonvexlinse
- 17: dritte Bikonvexlinse
- 18: zweite Plankonvexlinse
- 19: positive Meniskuslinse
- 20: Bikonkavlinse
- 21: Bildwandler
- 22: Bildbereich
- 23: überlappender Bildbereich
- 24: erstes Teilbild
- 25: zweites Teilbild
- 26: Kombinationsmittel
- 27: Kombiniertes Bild
- 28, 28': erste und zweite Fehlerstelle
- 29, 29': erste und zweite Korrekturstelle
- 3, 3': Abbildungssystem
- 31, 31': Primärspiegel
- 32, 32': Sekundärspiegel
- 33, 33': Kamera
- 4: Spalt
- 5: Gehäuse
- 51: Einfassung
- 52: Seitenwand
- 53: Boden
- 55: Versteifungsprofil
- 56: Öffnung
- 58: embedded Rechner
- 9: Detektor
- 91: Sensor
- 92: Blendenstreifen
- 93: Blendenverstellung
- 94: Detektor-Abschirmung
- 95: Detektorspiegel
- 96: Spiegelverstellung
- 97: Blendenbereich
- 98: Blendenausschnitt
- 99: Detektor-Auswerteeinheit
- 101: Körper
- 102: Strahlenquelle
- 103: Kamera
- 104: Messfeld
- 105: Referenzbild-Speicher
- 106: Datenverarbeitungseinheit
- 107: Anzeigegerät
- 111: Referenzbild
- 112: Livebild
- 113: Messfeld-Positionsbild
- 114: Lichtleiter
- 115: Messfläche
- 116: Messflächenausschnitt
- 117: Detektor-Optik

## Patentansprüche

1. Bilderfassungssystem zur elektronischen Erfassung eines Röntgenbildes, aufweisend mindestens ein Abbildungssystem (3, 3') zur optischen Abbildung eines Schirmbildes von einem Konverterschirm auf eine Kamera (33, 33') mit einem Objektiv (10) und einem optoelektronischen Bildwandler (21),
**dadurch gekennzeichnet, dass** das Objektiv (10) aus einem mehrgliedrigen Linsensystem gebildet ist, und eine monochromatische Bildfehlerkorrektur für eine vorgegebene Wellenlänge aufweist.

2. Bilderfassungssystem gemäss Anspruch 1, **dadurch gekennzeichnet, dass** das Linsensystem (10) in Lichtrichtung aufweist:
■ eine zur Objektebene durchgebogene erste negative Meniskuslinse (11),
■ eine erste Bikonvexlinse (12),
■ eine zur Objektebene durchgebogene zweite negative Meniskuslinse (13),
■ eine zweite Bikonvexlinse (14),
■ eine Plankonkavlinse (15),
■ eine erste Plankonvexlinse (16),
■ eine dritte Bikonvexlinse (17),
■ eine zweite Plankonvexlinse (18),
■ eine zur Bildebene durchgebogene positive Meniskuslinse (19), und
■ eine Bikonkavlinse (20).

3. Bilderfassungssystem gemäss Anspruch 2, **dadurch gekennzeichnet, dass** alle Linsenflächen sphärisch sind und dass jede der Linsen (11, 12, .. 20) aus jeweils einer von zwei Glassorten besteht.

4. Bilderfassungssystem gemäss Anspruch 2 oder 3, **dadurch gekennzeichnet, dass** die erste Bikonvexlinse (12) und die dritte Bikonvexlinse (17) jeweils beidseitig gleiche Radien aufweisen, und dass die erste Plankonvexlinse (16) und die zweite Plankonvexlinse (18) identische Masse aufweisen.

5. Bilderfassungssystem gemäss einem der vorherigen Ansprüche, **dadurch gekennzeichnet, dass** die Plankonkavlinse (15) und die erste Plankonvexlinse (16) miteinander verkittet sind und dass die positive Meniskuslinse (19) und die Bikonkavlinse (20) miteinander verkittet sind.

6. Bilderfassungssystem gemäss Anspruch 5, **dadurch gekennzeichnet, dass** die Werte der einzelnen Linsen, reduziert auf eine Brennweite von 100 mm, innerhalb von +/-10% um die folgenden Werte liegen
| | Radius | Abstand | Brechzahl |
|---|---|---|---|
| erste negative Meniskuslinse (11) | 149.6 | 16.6 | 1.77 |
| | 70.1 | 57.0 | |
| erste Bikonvexlinse (12) | 1077.9 | 14.2 | 1.77 |
| | -1077.9 | 0.6 | |
| zweite negative Meniskuslinse (13) | 143.2 | 9.4 | 1.52 |
| | 102.8 | 39.8 | |
| zweite Bikonvexlinse (14) | 289.7 | 42.1 | 1.77 |
| | -132.1 | 47.1 | |
| Plankonkavlinse (15) | -102.1 | 67.9 | 1.52 |
| erste Plankonvexlinse (16) | unendlich | 27.3 | 1.77 |
| | -194.9 | 5.7 | |
| dritte Bikonvexlinse (17) | 425.6 | 31.0 | 1.77 |
| | -425.6 | 5.7 | |
| zweite Plankonvexlinse (18) | 194.9 | 27.3 | 1.77 |
| | unendlich | 9.2 | |
| positive Meniskuslinse (19) | -210.3 | 17.8 | 1.52 |
| Bikonkavlinse (20) | -147.6 | 11.3 | 1.77 |
| | 398.9 | | |

7. Bilderfassungssystem gemäss Anspruch 6, **dadurch gekennzeichnet, dass** das Objektiv (10) eine Brennweite von 35 mm aufweist.

8. Bilderfassungssystem gemäss einem der vorherigen Ansprüche, **dadurch gekennzeichnet, dass** es Kombinationsmittel zum Zusammensetzen von vorgegebenen und einander nicht überlappenden Bildausschnitten der mindestens zwei Kameras (33, 33') aufweist.

9. Bilderfassungssystem gemäss einem der Ansprüche 1 bis 7, **dadurch gekennzeichnet, dass** es Mittel zur Korrektur von Fehlerstellen (28) eines Bildwandlers einer ersten Kamera (33) in einem überlappenden Bildbereich (23) anhand von Bildinformationen (29') eines Bildwandlers einer anderen Kamera (33') aufweist.

10. Bilderfassungssystem gemäss Anspruch 9; **dadurch gekennzeichnet, dass** es Bildwandler (21) mit Fehlerstellen (28, 28') aufweist, und die Bildwandler (21) derart orientiert sind, dass eine maximale Anzahl von Fehlerstellen (28, 28') in überlappenden Bildbereichen (23) liegt.

11. Bilderfassungssystem gemäss einem der vorherigen Ansprüche, **dadurch gekennzeichnet, dass** es einen eingebetteten Prozessor (26) aufweist, der zusammen mit dem Bilderfassungssystem in einem Röntgenrezeptor (1) eingebaut ist

12. Bilderfassungssystem gemäss einem der vorherigen Ansprüche, **dadurch gekennzeichnet, dass** der Bildwandler (21) ein CCD-Chip ist, und das Bilderfassungssystem Mittel zum dauernden Auslesen der CCD-Chips, und zum Unterbrechen des Auslesevorgangs, bevor eine Röntgenaufnahme gemacht wird, aufweist.

13. Bilderfassungssystem gemäss einem der Ansprüche 1 bis 12, **dadurch gekennzeichnet, dass** es aufweist
• Mittel (9, 91) zum Messen einer Menge von Licht, welches vom Konverterschirm abgestrahlt wird;
• Mittel (99) zur Ansteuerung einer Röntgenquelle nach Massgabe einer derart gemessenen Lichtmenge; und
• Mittel zur selektiven Auswahl (92, 93, 95, 96, 99) eines Anteils des abgestrahlten Lichts von mindestens einem vorgegebenen Bereich des Konverterschirmes.für die Messung.

14. Bilderfassungssystem gemäss Anspruch 13, wobei das Mittel zur selektiven Auswahl eine Blende (92) ist, welche in einem Strahlengang zwischen dem Konverterschirm und dem Mittel (91) zum Messen der Menge von Licht angeordnet ist und **dadurch** einen Anteil des Lichts, der von einem vorgegeben Bereich des Konverterschirms stammt, vom Mittel zum Messen (91) fernhält.

15. Bilderfassungssystem gemäss Anspruch 14, wobei die Blende (92) drehbar oder linear verschiebbar bezüglich eines Strahlengangs zwischen dem Konverterschirm und dem Messmittel (91) ist.

16. Bilderfassungssystem gemäss Anspruch 13, wobei das Mittel (9) zum Messen einer Menge von Licht eine Mehrzahl von lichtempfindlichen Sensoren (91) aufweist, die jeweils Licht von unterschiedlichen Bereichen des Konverterschirms erfassen, und wobei die Mittel zu selektiven Auswahl (99) eine Auswertung der Messwerte von einer vorgegebenen Untermenge der Sensoren (91) bewirken.

17. Bilderfassungssystem gemäss Anspruch 13, wobei das Mittel (9) zum Messen einer Menge von Licht mindestens einen lichtempfindlichen Sensor (91) aufweist, welcher Licht eines ausgewählten Bereiches des Konverterschirms erfasst, und wobei die Mittel zu selektiven Auswahl Stellglieder (95, 96) aufweisen, welche den ausgewählten Bereich variieren.

18. Bilderfassungssystem gemäss Anspruch 13, wobei das Mittel (9) zum Messen einer Menge von Licht mindestens einen lichtempfindlichen Sensor (91) aufweist, sowie mindestens einen Lichtleiter (114), welcher zum Erfassen von Licht aus einem Bereich des Konverterschirmes und zum Leiten des erfassten Lichtes zum Sensor (91) angeordnet ist.

19. Bilderfassungssystem gemäss Anspruch 13, wobei die Mittel zur selektiven Auswahl ein flächiges, elektrisch ansteuerbares Filter aufweisen, welches in einem Strahlengang zwischen dem Konverterschirm und dem Mittel (91) zum Messen der Menge von Licht angeordnet ist und derart ansteuerbar ist, dass vorgegebene Teilflächen des Filters einen Anteil des Lichts, der von einem entsprechenden Bereich des Konverterschirms stammt, vom Mittel (91) zum Messen fernhalten.

20. Bilderfassungssystem gemäss Anspruch 13, wobei die Mittel zur selektiven Auswahl Mittel zur Abbildung zumindest eines Teiles des Konverterschirmes auf eine Messfläche (115) aufweisen, die Messfläche (115) eine Mehrzahl von lichtempfindlichen Sensoren (91) aufweist, und anhand von Signalen einer wählbaren Untermenge der Sensoren (91) entsprechend einem Mess-Ausschnitt (116) ein Mass für eine Belichtung des Mess-Ausschnittes (116) bildbar ist.

21. Bilderfassungssystem gemäss einem der Ansprüche 1 bis 20, **dadurch gekennzeichnet, dass** es aufweist
• eine elektronische Kamera (103), die einen vor dem Röntgenschirm angeordneten Körper (101) in einem Bild erfasst;
• Mittel (105) zum Speichern von computerlesbaren Referenzbildern; und
• Mittel (106, 107) zum gleichzeitigen Anzeigen eines ausgewählten Referenzbildes (111) und des von der Kamera (103) erfassten Bildes (112) auf einem Anzeigegerät (107).

22. Bilderfassungssystem gemäss Anspruch 21, **dadurch gekennzeichnet, dass** es ferner aufweist Mittel (106, 107) zur überlagerten Anzeige des ausgewählten Referenzbildes (111) und des von der Videokamera (103) erfassten Bildes (112).

23. Bilderfassungssystem gemäss Anspruch 21 oder 22, **dadurch gekennzeichnet, dass** es ferner aufweist Mittel (106, 107) zur überlagerten Anzeige von vorgegebenen Messfeldern (113) auf mindestens einem von dem ausgewählten Referenzbild (111) und dem von der Videokamera (103) erfassten Bild (112).

24. Verfahren zur Ansteuerung und Auswertung eines Bilderfassungssystems gemäss einem der vorherigen Ansprüche, **dadurch gekennzeichnet, dass** vorgegebene und einander nicht überlappende Bildausschnitte von mindestens zwei Kameras (33, 33') zu einem Gesamtbild (27) zusammengesetzt werden, wobei ein Grossteil der Bildinformationen in einem überlappenden Bereich (23) im Gesamtbild im wesentlichen unverändert von jeweils einer der mindestens zwei Kameras (33, 33') übernommen wird.

25. Verfahren gemäss Anspruch 24, **dadurch gekennzeichnet, dass** die Bildausschnitte entlang einer vorgegebenen Trennlinie zusammengesetzt werden.

26. Verfahren gemäss Anspruch 24, **dadurch gekennzeichnet, dass** jeweils einzelne Pixelfehler (28) einer ersten Kamera (33) durch Bildinformationen (29) einer anderen Kamera (33') ersetzt werden.

27. Verfahren gemäss Anspruch 24, **dadurch gekennzeichnet, dass** der Bildwandler (21) ein CCD-Chip ist, der CCD-Chip zwischen Röntgenaufnahmen dauernd ausgelesen wird, und der Auslesevorgang unterbrochen wird bevor eine Röntgenaufnahme gemacht wird.

28. Verfahren gemäss einem der Ansprüche 24 bis 27, wobei die folgenden Schritte ausgeführt werden:
• Auswählen eines Anteils von Licht, welches durch einen Konverterschirm abgestrahlt wird, aus mindestens einem vorgegebenen Bereich des Konverterschirmes;
• Messen dieses Anteils von Licht; und
• Ansteuern einer Röntgenquelle (102) nach Massgabe des gemessenen Anteils von Licht.

29. Verfahren gemäss einem der Ansprüche 24 bis 28, wobei die folgenden Schritte ausgeführt werden:
• Erfassen eines Bildes eines Körpers (101) vor einem Röntgenschirm mittels einer elektronischen Kamera (103);
• Auslesen eines computerlesbaren Referenzbildes (111) aus einem Bildspeicher (105); und
• gleichzeitiges Anzeigen eines ausgewählten Referenzbildes (111) und des von der Kamera (103) erfassten Bildes (112) auf einem Anzeigegerät (107).

30. Verfahren gemäss einem der Ansprüche 24 bis 29, wobei die folgenden Schritte ausgeführt werden:
• Darstellen einer Lage eines Messfeldes durch ein Messfeld-Positionsbild (113) auf einem Anzeigegerät (107);
• Verschieben des Messfeld-Positionsbildes (113) mittels eines Eingabemittels;
• Auswahl eines Teiles einer Messfläche des Bilderfassungssystems zur Belichtungssteuerung nach Massgabe der Lage des Messfeld-Positionsbildes (113).
